# EUROPEAN PATENT APPLICATION

(11) **EP 2 182 773 A1**
(43) Date of publication of application: **05.05.2010**
(21) Application number: 08858610.2
(22) Date of filing: 11.12.2008
(51) Int. Cl.: H05B 3/82, A47J 27/21, H05B 3/04, H05B 3/14

(54) **HEATING ELEMENT DEVICE AND METHOD OF MANUFACTURING THE SAME**

(30) Priority: 13.12.2007 JP 2007321930
(71) Applicant: Ucan Co., Ltd., Hachioji-shi Tokyo 193-0832 (JP)
(72) Inventor: ANDO, Iwao, Hachioji-shi Tokyo 193-0942 (JP)
(74) Representative: Piésold, Alexander James
(86) International application number: PCT/JP2008/072472
(87) International publication number: WO 2009/075310

(57) **Abstract**

A heating element device is provided with a heat dissipation case (2) made of metal having a first case plate (2a) and a second case plate (2b) which have peripheral edge portions (6, 9) air-tightly connected to each other. A plurality of ceramic semiconductor heating elements (14) are sandwiched between the both case plates (2a, 2b) through electrode plates (16) in between. An electricity supply path (4b) to each of the electrode plates (16) is disposed air-tightly to the inside of the heat dissipation case (2). Moreover, a hollow portion in the heat dissipation case (2) is maintained in a vacuum state so that an inner face (8) of the first case plate (2a) and an inner face (12) of the second case plate (2b) are always subjected to an attraction force in a direction in which they get closer to each other.

## Description

### Technical Field

The present invention relates to a heating element device using a ceramic semiconductor heating element and a method of manufacturing the same.

### Background Art

The following Patent Document 1 describes a heating element device in which a plurality of ceramic semiconductor heating elements are disposed in a flat heat dissipation case made of metal. The heat dissipation case is formed by combining a first case plate and a second case plate. On an inner face of the heat dissipation case, that is, on the inner face of each of the case plates, an electrode plate is fixed through an insulating layer. Between the electrode plates, the plurality of ceramic semiconductor heating elements are distributed. The heating element device is suitable if it is used as a heating source for a liquid such as water and oil and is incorporated as a heat source in an electric water heater, an electric noodle boiler, an electric fryer for deep fry (deep-fried food, tempura and the like), a humidifier for air conditioning and the like.

In this type of heating element devices, from a viewpoint of improving heat efficiency, each of the ceramic semiconductor heating elements and the heat dissipation case (that is, between each of the ceramic semiconductor heating elements and the electrodes and between the electrodes and the heat dissipation case) need to be in firm pressure welded state all the time. If the pressure welded state is poor or the pressure welding force is weak, sufficient heat generation cannot be obtained from each of the ceramic semiconductor heating elements or heat conductivity from each of the ceramic semiconductor heating elements to the heat dissipation case might become defective.

The pressure welding force between each of the ceramic semiconductor heating elements and the heat dissipation case has been maintained as follows. That is, in a state in which the ceramic semiconductor heating elements are pressed and sandwiched between the first case plate and the second case plate, a center part and a peripheral edge part of both the case plates, totaling in two spots, are connected to each other so as to maintain the pressure welding force.

Also, the heat dissipation case is configured liquid-tightly to a heating target outside the case so that a liquid does not intrude into the inside, while the case is made to communicate with the atmospheric air outside the liquid container through a taking-out cylinder of a conductor connected to the electrode plate.

The heating element devices as above include those with various outputs from a small-output heating element device (small-sized heating element device) with the fewer number of ceramic semiconductor heating elements of 5 to 10 to a large-output heating element device (large-sized heating element device) with the number of incorporated ceramic semiconductor heating elements up to several tens, and the larger the number of used ceramic semiconductor heating elements is, the larger an area of the heat dissipation case becomes.

However, the above prior-art pressure contact mode is not suitable for application to a heat element device for large output. That is, if the heat dissipation case is large, a distance from the center part to the peripheral edge part is large, and with the prior-art pressure welding mode in which only the center part and the peripheral edge port are connected to each other, it is difficult to strongly press the heat dissipation case evenly to all the large number of ceramic semiconductor heating elements disposed between them.

Also, there is another problem that with the prior-art heating element device that an output might be lowered during use for a long time. In the heat element device, the temperature is greatly changed between a high temperature and a low temperature as a whole between operation and non-operation. This drastic temperature change is repeated again and again throughout a use period. Thus, due to a difference in expansion coefficient among each portions, metal fatigue of the heat dissipation case and the like, the pressure welded state between the ceramic semiconductor heating element and the heat dissipation case might be deteriorated or the pressure welding force between them might be weakened. This is considered to cause the lowered output.

This problem is more remarkable if the size of the heating element device is large. That is because the larger the heating element device is, the longer the distance between the center part and the peripheral edge part of the heat dissipation case, and an influence of distortion in each portion by repetition of the temperature change over a long period of time becomes greater.

There is still another problem. As mentioned above, the prior-art heat dissipation case is made to communicate with the atmospheric air outside the container of a liquid to be heated. Thus, if the heat dissipation case repeats a high temperature and a low temperature, the outside air can freely go in and out of the case. Therefore, if a humidity of the outside air is high, condensation occurs in the heat dissipation case when the temperature is lowered, which causes defective insulation or electric leakage or oxidizes the electrode plate to result in a contact failure and undermines a life of the heating element device.

Patent Document 1: Japanese Examined Utility Model Registration Application Publication No. 4-36071

### Disclosure of Invention

The present invention was made in view of the above circumstances and provides a heating element device in which favorable performances are guaranteed regardless of an output or a size and the performances are maintained for a long time and moreover, a life is long. Also, the present invention provides a method of manufacturing the heating element device.

In order to solve the above problems, a heating element device according to the present invention is provided with a heat dissipation case made of metal constructed by a first case plate and a second case plate having peripheral edge portions air-tightly connected to each other, a plurality of ceramic semiconductor heating elements sandwiched between the both case plates and distributed in the heat dissipation case, electrode plates in contact with each of the ceramic semiconductor heating elements on an inner face side of each of the case plates, and an insulation layer insulating between each of the electrode plate and an inner face of each of the corresponding case plates, in which an electricity supply path to each of the electrode plates is air-tightly disposed to the inside of the heat dissipation case, and a hollow portion in the heat dissipation case is kept in a vacuum state so that the inner face of the first case plate and the inner face of the second case plate are always subjected to an attraction force in a direction in which they get closer to each other.

According to the present invention, by electrifying each of the electrode plates through the electricity supply path, each of the ceramic semiconductor heating elements generates heat. This heat is transmitted to the heat dissipation case and emitted to the outside. The insulation layer prevents leakage to each of the case plates of electric power supplied to the electrode plate.

In the present invention, the peripheral edge portions of the first case plate and the second case plate are air-tightly connected to each other and the electricity supply path to each of the electrode plates is air-tightly disposed to the inside of the heat dissipation case. The hollow portion in the heat dissipation case is kept in a vacuum state so that the inner face of the first case plate and the inner face of the second case plate are always subjected to an attraction force in a direction in which they get closer to each other. Thus, regardless of the output or size of the heating element device, a predetermined pressure welding force can be evenly given in between the inner face of each of the case plates and each of the ceramic semiconductor heating elements. As a result, regardless of the output or size, favorable performances of the heating element device are guaranteed.

Also, the pressure welding force maintained by the vacuum provides favorable resistance against distortion which has easily occurred in each portion of the device by repetition of a large temperature change. Even if distortion occurs in each portion of the device, the pressure welding force by the vacuum continues, and the performances of the heating element device are prevented from being lowered.

Moreover, since the inside and out of the heat dissipation case is air-tightly shut off, no condensation occurs inside the heat dissipation case. Therefore, there is no room for a failure caused by condensation, which has occurred in the past, and a life of the heating element device is prolonged.

In the meantime, a method of manufacturing a heating element device according to the present invention is characterized in that a ventilation hole communicating with the hollow portion is provided at a part of a half-finished product before completion as the heating element device, the half-finished product having the ventilation hole is placed in an air-tight tank and the air-tight tank is evacuated, and the ventilation hole is air-tightly closed in the air-tight tank.

### Brief Description of Drawings

[Fig. 1] Fig. 1 is a partial sectional view illustrating an entire configuration and a mounted state of a heating element device according to an embodiment of the present invention.
[Fig. 2] Fig. 2 is an exploded perspective view of a heat dissipation case and a heat generation mechanism in Fig. 1.
[Fig. 3] Fig. 3 is a sectional view of a conductor taking-out portion in Fig. 1.
[Fig. 4] Fig. 4(a) is a front view and Fig. 4(b) is a bottom view of a heating element device according to another embodiment.
[Fig. 5] Fig. 5 is an explanatory diagram illustrating another example of a pressure reduction process of a heat dissipation case.

### Best Modes for Carrying Out the Invention

A best mode for carrying out the present invention will de described below referring to the attached drawings.

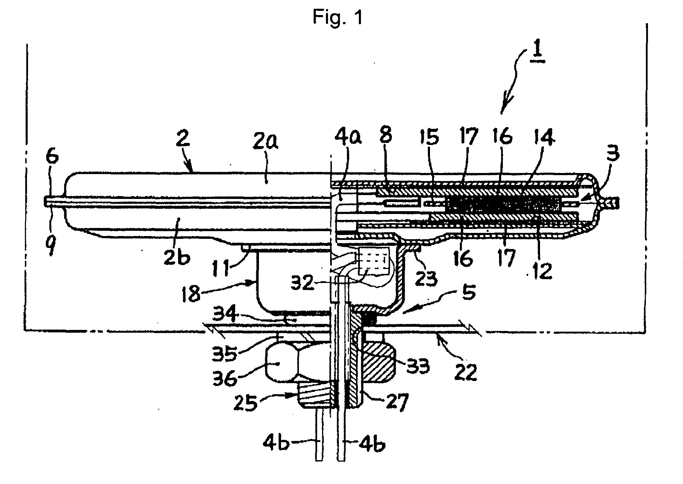

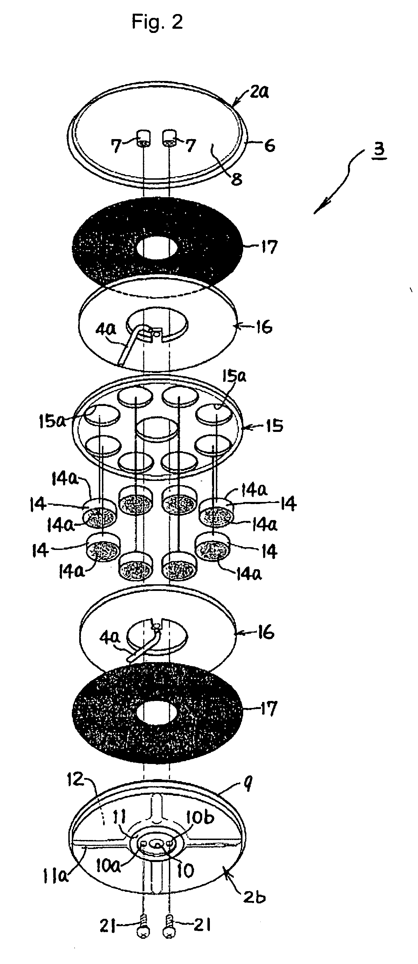

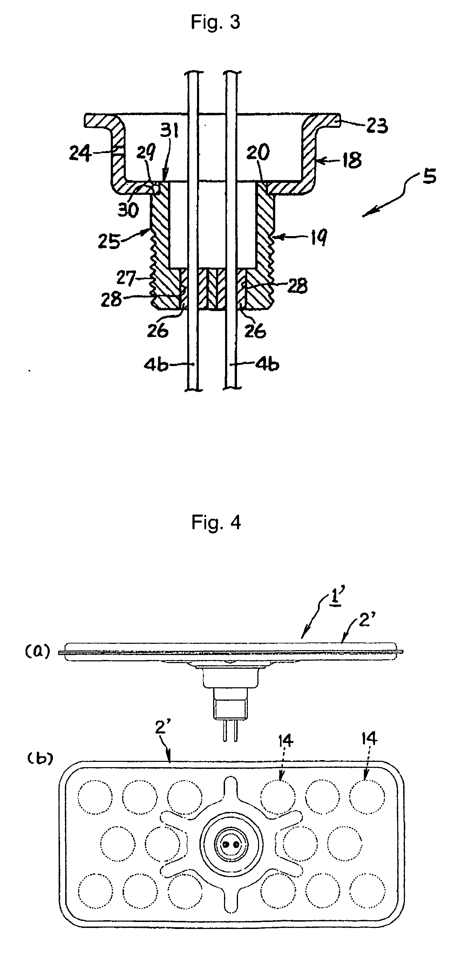

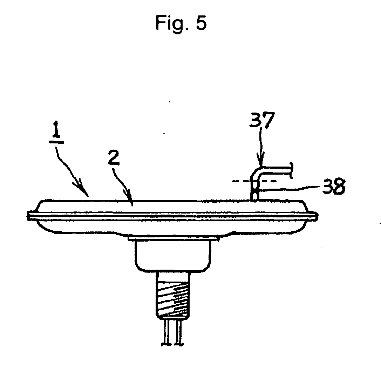

Fig. 1 is a partial sectional view illustrating an entire configuration and a mounted state of a heating element device according to an embodiment of the present invention, Fig. 2 is an exploded perspective view of a heat dissipation case and a heat generation mechanism in Fig. 1, Fig. 3 is a sectional view of a conductor taking-out portion in Fig. 1, Fig. 4(a) is a front view and Fig. 4(b) is a bottom view of a heating element device according to another embodiment, and Fig. 5 is an explanatory diagram illustrating another example of a pressure reduction process of a heat dissipation case.

As shown in Fig. 1, a heating element device 1 according to the embodiment of the present invention is provided with a thin heat dissipation case 2 imparted with air tightness, a heat generation mechanism 3 disposed in the heat dissipation case 2, and a conductor taking-out portion 5.

The heat dissipation case 2 is formed by a combination of an upper-side first case plate 2a and a lower-side second case plate 2b. In the example in Fig. 1, the heat dissipation case 2 has a circular shape when seen from above, but not limited to that, the shape may be a square or any other shapes.

The first case plate 2a has, as shown in Fig. 2, a shallow cylindrical vessel shape having an outward flange 6 on a peripheral edge thereof, and two stay bosses 7 and 7 are fixed by welding at a center part inside thereof. Into the stay bosses 7 and 7, mounting screws 21 and 21 are screwed. An inner face 8 of the first case plate 2a acts as a pressing face for pressing and sandwiching the heat generation mechanism 3 with the second case plate 2b in an assembled state of the heating element device 1.

The second case plate 2b has, as shown in Fig. 2, a shallow drawing circular dish shape having an outward flange 9 on a peripheral edge thereof, a conductor taking-out hole 10 is formed at a center part thereof, and mounting screw insertion holes 10a and 10b for receiving the mounting screws 21 and 21 are formed on both sides of the conductor taking-out hole 10. Also, on the second case plate 2b, a ring-shaped projection portion 11 projecting downward is formed. This ring-shaped projection portion 11 is formed so as to surround the two mounting screw insertion holes 10a and 10b and is disposed concentrically with the conductor taking-out hole 10. An inner face 12 of the second case plate 2b acts as a pressing face for pressing and sandwiching the heat generation mechanism 3 with the first case plate 2a in the assembled state of the heating element device 1. On the second case plate 2b, a rib 11a can be provided as necessary in order to improve strength.

The both case plates 2a and 2b are formed by a metal material excellent in corrosion resistance and chemical resistance such as titanium, zirconium, stainless steel and the like. As shown in Fig. 1, by joining the both case plates 2a and 2b in assembling, the outward flanges 6 and 9 are brought into close contact with each other. In this combined state, as shown in Fig. 2, the mounting screws 21 and 21 are inserted into the mounting screw insertion holes 10a and 10b, and distal end sides of the mounting screws 21 and 21 are screwed into the stay bosses 7 and 7. As a result, the both case plates 2a and 2b are joined together. Therefore, the lengths of the stay bosses 7 and 7 are set to be a length which does not touch the second case plate 2b when the both case plates 2a and 2b are combined together.

The heat generation mechanism 3 is, as shown in Fig. 2, provided with a plurality of (eight in the example in Fig. 2) ceramic semiconductor heating elements (hereinafter referred to as PTC) 14, a positioning plate 15 positioning distribution of each of the PTCs 14, and electrode plates 16 and 16 in contact with each of upper and lower faces of each of the PTCs 14.

Each of the PTCs 14 has a disc shape having a positive resistance temperature characteristic and integrally has ohmic contact electrodes 14a on both upper and lower faces. All the PTCs have the same structure and usually the same shape and the same size, but particularly, at least only thickness is required to be the same.

The positioning plate 15 has a doughnut shape made of laminated mica, for example, and is provided with the same number of positioning holes 15a as the number of the PTCs 14 with an equal interval in a circumferential direction. In each of the positioning holes 15a, each of the PTCs 14 is fitted in an adapted state. The PTCs 14 are preferably distributed with a good balance with an equal interval in the heat dissipation case 2. As a result, in the heat dissipation case 2, hollow portions are distributed with a good balance (evenly) as portions excluding the PTC 14.

Each of the electrode plates 16 is formed in a doughnut shape from aluminum, copper, silver or an alloy of them. On an inner-end edge portion of each of the electrode plates 16, an inner end of an inside conductor 4a is connected, respectively.

Between the heat generation mechanism 3 and each of the case plates 2a and 2b, an insulation sheet 17 having heat resistance such as polyimide or polytetrafluoroethylene is interposed. Each of the insulation sheets 17 becomes an insulation layer electrically insulating each of the electrode plates 16 from the corresponding inner faces 8 and 12 of the case plates 2a and 2b. Each of the insulation sheets 17 is in a doughnut shape having a center hole so that the stay bosses 7 and 7 can be avoided in assembling of the device similarly to the positioning plate 15 and each of the electrode plates 16.

Subsequently, the conductor taking-out portion 5 will be described. The conductor taking-out portion 5 is, as shown in Fig. 1, fastened to the lower face of the heat dissipation case 2. The conductor taking-out portion 5 disposes an electricity supply path 4b to each of the electrode plates 16 to the inside of the heat dissipation case 2 in an air tight state and also acts as a mounting portion for mounting the heating element device 1 to a mounting target 22.

As shown in Fig. 3, the conductor taking-out portion 5 is provided with a spacer 18 and a seal shaft 19. The spacer 18 is a cylindrical body with a bottom made of metal, and a shaft connecting hole 20 for connecting the seal shaft 19 is formed on a bottom portion thereof. On a peripheral edge of an upward opening portion of the spacer 18, an outward flange 23 is formed. The outward flange 23 is brought into close contact with the ring-shaped projection portion 11 of the second case plate 2b when the spacer 18 is fastened to the heat dissipation case 2 (See Fig. 1). In the spacer 18, a small ventilation hole 24 is formed. This ventilation hole 24 is, as will be described later, to decompress the inside of the heat dissipation case 2 so as to evacuate it. Since the ventilation hole 24 needs to be blocked after the inside of the heat dissipation case 2 is evacuated, it preferably kept as a small hole. The spacer 18 is formed by the same metal material as that of the both case plates 2a and 2b.

The seal shaft 19 is provided with a shaft portion 25 into which two external conductors 4b and 4b as the electricity supply paths are inserted and a seal material 26 for air-tightly sealing between the shaft portion 25 and the two external conductors 4b and 4b.

The shaft portion 25 has a connection portion 31 to the spacer 18 on the upper end side and a screw groove 27 for mounting to the mounting target 22 on an outer periphery on the lower end side. In the shaft portion 25, two external conductor insertion holes 28 and 28 are formed for inserting the external conductors 4b and 4b. The shaft portion 25 is also formed by a metal material similar to that of the both case plates 2a and 2b.

The connection portion 31 is provided with a small diameter portion 29 slightly smaller than an outer diameter of the shaft portion 25 and a stepped portion 30 formed between the small diameter portion 29 and an outer peripheral face of the shaft portion 25. In a state in which the shaft portion 25 is connected with the spacer 18, the small diameter portion 29 is fitted in the shaft connection hole 20 of the spacer 18 in an adapted state, and the stepped portion 30 is brought into contact with a part of the bottom face of the spacer 18. In this state, the seal shaft 19 is air-tightly joined to the spacer 18 by an appropriate fastening method. A specific fastening method includes a method of welding from inside the spacer 18 or the like.

As the seal material 26, an appropriate known seal material that can give firm air-tightness between the shaft portion 25 and the external conductors 4b and 4b and is provided with required performances in order to withstand a use environment of the heating element device 1 such as heat resistance, pressure resistance and the like is used. For example, a hermetic seal in which glass melted by high heat is sealed can be used or as an adhesive satisfying the above conditions, an inorganic adhesive or the like having alumina as a main component and alcoholic solvent as a solvent can be used. Sealing by the seal material 26 between the shaft portion 25 and the external conductors 4b and 4b is preferably performed before fastening the shaft portion 25 to the spacer 18 from the viewpoint of easiness of the sealing work.

Subsequently, a method of manufacturing the heating element device 1 will be described. The manufacture of the heating element device 1 is performed in order of a disposing process of the heat generation mechanism 3 in the heat dissipation case 2, a joining process of the heat dissipation case 2, a connecting process of the conductor taking-out portion 5 to the heat dissipation case 2, and a pressure reduction process for evacuating the inside of the heat dissipation case 2.

As the disposing process of the heat generation mechanism 3 in the heat dissipation case 2, first, the stay bosses 7 and 7 are fastened to the inside of the first case plate 2a by a method of spot welding or the like. Then, the insulation sheet 17 is set on the inner face of the first case plate 2a. Since there is a hole opened at the center part of the insulation sheet 17, it can be set avoiding the stay bosses 7 and 7. The insulation sheet 17 is also set on the inner face of the second case plate 2b. After that, the heat generation mechanism 3 is disposed on the insulation sheet 17 of the first case 2a.

Specifically, a single piece of the electrode plate 16 is overlapped on the insulation sheet 17, the positioning plate 15 and each of the PTCs 14 are disposed thereon, and moreover, another piece of the electrode plate 16 is disposed thereon. At this time, each of the electrode plates 16 is disposed at positions where the inner end portions of the both internal conductors 4a are positioned so as to oppose each other on the center hole of the both electrode plates 16 and at angular positions separated from the stay bosses 7 and 7 by 90° so that the inner end portions of the both internal conductors 4a connected to the both electrode plates 16 do not interfere with each other or they do not interfere with the stay bosses 7 and 7. After that, each of the internal conductors 4a and 4a is inserted through each of the conductor taking-out holes 10a and 10b of the second case plate 2b, and the second case plate 2b on which the insulation sheet 17 has been already disposed is combined on the first case plate 2a so that the outward flanges 6 and 9 are brought into planar contact with each other.

Then, the stay bosses 7 and 7 of the first case plate 2a and the mounting screw insertion holes 10a and 10b of the second case plate 2b are positioned, the mounting screws 21 are inserted into the mounting screw insertion holes 10a and 10b from outside the second case plate 2b, and they are screwed into the stay bosses 7 and 7 of the first case plate 2a. As a result, the case plates 2a and 2b are connected to each other at their center parts, and at the same time, disposition of the heat generation mechanism 3 in the heat dissipation case 2 is completed. In this state, inside the heat dissipation case 2, the inner face 8 of the first case plate 2a and the inner face 12 of the second case plate 2b press and sandwich the heat generation mechanism 3. Inside the heat dissipation case 2, the PTCs 14 are distributed with a good balance, and the hollow portions are distributed with a good balance (evenly) between each of the PTCs 14 and between each of the PTCs 14 and the inner peripheral face of the heat dissipation case 2 corresponding to them.

Subsequently, as the joining process of the heat dissipation case 2, first, the outward flanges 6 and 9 in planar contact with each other are pressed from outside so as to be firmly brought into close contact. In this state, the entire peripheral edges of the both flanges 6 and 9 are welded so that the both flanges 6 and 9 are air-tightly joined to each other. At this time, in order to prevent oxidation of the both case plates 2a and 2b, the welding is preferably performed in an inactive atmosphere. Also, in order to prevent the insulation sheets 17 and the like inside from being damaged by heat of the welding, the both case plates 2a and 2b are preferably cooled actively at spots other than those to be welded during the welding.

Subsequently, as the connecting process of the conductor taking-out portion 5 to the heat dissipation case 2, the external conductors 4b and 4b of the conductor taking-out portion 5 and the internal conductors 4a and 4a extending from the electrode plates 16 and 16 are cut off to an appropriate length. Then, by a method such as pressure welding of a sleeve 32 for connection (See Fig. 1) or the like, the conductors 4a and 4b are connected to each other. Then, while the sleeve 32 for connection and the conductors 4a and 4b are housed inside the spacer 18, the conductor taking-out portion 5 is air-tightly connected to the heat dissipation case 2. Specifically, the outward flange 23 of the spacer 18 is overlapped on the ring-shaped projection portion 11 of the second case plate 2b and the entire peripheries of the overlapped parts are air-tightly welded. At this time, in order to prevent heat-resistant coated tubes of the conductors 4a and 4b inside from being burned out by heat of the welding, the conductors 4a and 4b to be housed in the spacer 18 are preferably covered by a heat-resistant protective tube made of glass fiber or the like in advance.

Subsequently, as the pressure reduction process to evacuate the inside of the heat dissipation case 2, a half-finished product of the heating element device, which is an integrated product of the heat dissipation case 2 and the conductor taking-out portion 5, is placed in an air-tight tank (not shown), and the air-tight tank is evacuated. As a result, air in the heat dissipation case 2 is sucked out through the ventilation hole 24 of the spacer 18. A vacuum degree shall be approximately 10⁻² to 10⁻⁴ Torr. When the evacuation is finished, inside the air-tight tank in the vacuum state, the ventilation hole 24 of the spacer 18 is air-tightly blocked by beam welding or the like. As a result, the heating element device 1 is completed. By performing the pressure reduction process, the hollow portions evenly distributed in the heat dissipation case 2 are maintained in the vacuum state, and as a result, a state in which a large attraction force evenly acts all the time between the inner face 8 of the first case plate 2a and the inner face 12 of the second case plate 2b in a direction in which they get closer to each other (state in which an outer face of the first case plate 2a and an outer face of the second case plate 2b are strongly pressed by the atmospheric air in the direction in which they get closer to each other) can be obtained.

As shown in Fig. 1, the heating element device 1 can be used by being mounted on the tank (mounting target) 22 reserving a liquid to be heated. That is, the heat dissipation case 2 is arranged in the tank 22, and the shaft portion 25 is inserted into a mounting hole 33 of the tank 22. Between the inner face of the tank 22 and the spacer 18, a packing 34 made of resin or rubber and the like is interposed. As a material of the packing 34, an optimal one is selected as appropriate according to a type of the liquid to be heated. A washer 35 is attached to the shaft portion 25 protruding outside the tank 22, and a nut 36 fitting the screw groove 27 is tightened.

By electrifying each of the electrodes 16 and 16 through the external conductors 4b and 4b, each of the PTCs generates heat. The heat is transmitted to the heat dissipation case 2, and the liquid in the tank 22 is heated. The insulation sheets 17 and 17 prevent leakage of the power supplied to each of the electrode plates 16 and 16 to the case plates 2a and 2b.

In the heating element device 1, the first case plate 2a and the second case plate 2b are tightened in a direction in which they get closer to each other by the mounting screws 21 and 21 at the center parts thereof, and moreover, they are connected to each other in a state in which the peripheral edge portions (outward flanges) 6 and 9 of the both case plates 2a and 2b are pressed to each other. In addition, since a strong vacuum degree is imparted into the heat dissipation case 2, the attraction force acts all the time on the whole of the inner face 8 of the first case plate 2a and the inner face 12 of the second case plate 2b in a direction in which they get closer to each other. Thus, as compared with the prior art technique in which the inside of the heat dissipation case 2 is not brought into vacuum, the inner face of the heat dissipation case 2 is pressed into contact with the heat generation mechanism 3 more strongly and evenly, and at the same time, because of this pressure welding force, each of the electrode plates 16 and each of the PTCs 14 are also pressed into contact with each other evenly with a strong force. As a result, regardless of the output or size of the heating element device 3, heat generation efficiency in the heat generation mechanism 3 becomes favorable and conductivity of the heat generated in the heat generation mechanism 3 to the heat dissipation case 2 also becomes favorable. This effect is particularly remarkable in a large-sized heating element device incorporating several tens of the PTCs 14 and correspondingly having a large area of the heat dissipation case 2.

Also, in the heating element device 1, since the attraction force between the inner face 8 of the first case plate 2a and the inner face 12 of the second case plate 2b in a direction in which they get closer to each other acting by vacuum is maintained throughout a usable life of the heating element device 1, the device has favorable resistance against distortion which has easily occurred in each portion of the device due to repetition of a large temperature change based on a long-term use. Even if distortion occurs in a portion of the device due to the long-term use, a large and even pressure welding force of the first case plate 2a and the second case plate 2b on the heat generation mechanism 3 is maintained at a high level by the attracting force generated by vacuum. Thus, deterioration of the performances of the heating element device 1 is prevented.

Moreover, since the inside and out of the heat dissipation case 2 is air-tightly shut off, no condensation occurs inside the heat dissipation case 2. Thus, there is no room for occurrence of a failure which has been caused by condensation, and the life of the heating element device 1 is prolonged.

Other embodiments with various changes given to each portion of the heating element device 1 can also be employed.

For example, the case in which 8 pieces of the PTCs 14 are incorporated and the heat dissipation case 2 is circular has been described for the above embodiment, but the present invention can be applied even if the number of the PTCs 14 may be larger or smaller than that, and the plane shape of the heat dissipation case is not limited. For example, a heating element device 1' may have a large size (16 pieces of the PTCs 14 are incorporated) as shown in Fig. 4 or a heat dissipation case 2' having a square shape on a plan view or the like. For those with a large output, the conductor taking-out portion 5 can be disposed at plural spots (in plural number).

Also, the disposed positions of the mounting screws 21 and 21 in the heat dissipation case 2 do not have to be in the vicinity of the center part of the heat dissipation case 2 but may be at positions more displaced than in the example in Fig. 2 from the center part in the direction of the peripheral edge. The number of mounting screws 21 and 21 is not limited, either, and since the strong attraction force acts between the first case plate 2a and the second case plate 2b, the present invention can be put into practice in a mode not having the mounting screws 21 and 21.

Moreover, the pressure reduction process of the heat dissipation case 2 can be performed with another method. For example, as shown in Fig. 5, an intake pipe 37 for evacuation is formed integrally with the heat dissipation case 2 in advance, the intake pipe 37 is blocked after the evacuation, and an unnecessary part ahead of a blocking portion 38 is cut off. Also, instead of the method of blocking the intake pipe 37, such a mode can be employed that a manual valve or the like is provided in the middle of the intake pipe 37.

## Claims

1. A heating element device comprising a heat dissipation case made of metal constructed by a first case plate and a second case plate having peripheral edge portions air-tightly connected to each other, a plurality of ceramic semiconductor heating elements sandwiched between said both case plates and distributed in said heat dissipation case, electrode plates in contact with each of said ceramic semiconductor heating elements on an inner face side of each of said case plates, and an insulation layer insulating between each of the electrode plates and an inner face of each of the corresponding case plates, wherein an electricity supply path to each of said electrode plates is disposed air-tightly to the inside of said heat dissipation case, and a hollow portion in said heat dissipation case is kept in a vacuum state so that the inner face of the first case plate and the inner face of the second case plate are always subjected to an attraction force in a direction in which they get closer to each other.

2. A method of manufacturing the heating element device according to claim 1, wherein at a part of a half-finished product before being completed as said heating element device, a ventilation hole communicating with said hollow portion is provided, the half-finished product is placed in an air-tight tank and the air-tight tank is evacuated, and said ventilation hole is blocked air-tightly in the air-tight tank.
